# EUROPÄISCHE PATENTSCHRIFT

(11) **EP 0 807 667 B1**
(45) Veröffentlichungstag und Bekanntmachung des Hinweises auf die Patenterteilung: **09.10.2002**
(21) Anmeldenummer: 97105892.0
(22) Anmeldetag: 10.04.1997
(51) Int. Cl.: C08L 83/04, C08K 5/01

(54) **Aushärtbare Silicondichtungsmasse**
Curable silicone sealant composition
Composition d'étanchéité de silicone durcissable

(30) Priorität: 18.05.1996 DE 19620100
(43) Veröffentlichungstag der Anmeldung: 19.11.1997
(73) Patentinhaber: B & F Formulier- und Abfüll GmbH & Co. KG, 51580 Reichshof-Hahn (DE)
(72) Erfinder: Schneider, Friedhelm, 51580 Reichshof-Wiehl (DE)
(74) Vertreter: Missling, Arne, Dipl.-Ing.

(56) Entgegenhaltungen:
- EP-A- 0 043 501
- EP-A- 0 158 141
- DE-A- 2 908 036
- DE-A- 4 415 396

## Beschreibung

Die Erfindung betrifft eine Dichtungsmasse mit einem Silikonpolymer als Basis, einem Vernetzer und einem Beschleuniger sowie nach Bedarf zuzusetzenden Füllstoffen und einem Weichmacher, die im Kontakt mit der Umgebungsfeuchte, durch Wärmezufuhr oder durch Addition ihrer Bestandteile (2K-Produkte) aushärtet.

Dichtungsmassen dieser Art werden in großem Umfang im Bauwesen sowohl im Innen- als auch im Außenbereich zur Abdichtung von Bau- und Dehnungsfugen verwendet. In der DE-OS 29 08 036 ist eine solche Dichtungsmasse beschrieben, bei der zumindest ein Teil der darin verwendeten nicht reaktionsfähigen Silikonverbindungen unter Beibehaltung der reaktiven Polysiloxane ersetzt werden und dafür organische alkylaromatische Verbindungen zugesetzt werden, die jeweils ein Molekulargewicht von über 200 aufweisen. Die Verwendung beispielsweise von Paraffinöl wird hingegen nicht für vorteilhaft gehalten, weil die damit hergestellten Dichtungsmassen instabil sind und beim Aushärten ausschwitzen.

Aus der DE-A1-44 15 396 ist eine Dichtungsmasse aus einer vernetzbaren Silikonverbindung, und zwar in pastöser, spachtelbarer Form bekannt, welche aus einem anorganischen Polymer, und zwar einem reaktiven organischen Polysiloxan als Hauptbestandteil besteht und einer alkylaromatischen Verbindung als Weichmacher, einer Benzamid-Verbindung als Vernetzer, einem Haftmittel und einem Beschleuniger besteht. Diese Dichtungsmasse, die sowohl durchsichtig-transparent, als auch geruchsfrei und ungefährlich in der Handhabbarkeit ist, hat folgende Zusammensetzung in Gewichts-%:
- 51,8 bis 68,3% alpha,omega-Dihydroxypolydimethylsiloxan,
- 20 bis 30 % eines transparenten, bei Raumtemperatur flüssigen Polyalkylbenzols,
- 3,0 bis 5,0 % Benzamidosilan,
- 0,4 bis 1,0 % Aminopropyltriethoxysilan und
- 0,10 bis 0,40 % des Beschleunigers, aufgefüllt mit 8 bis 12 % einer nicht reaktionsfähigen flüssigen Silikonverbindung, insbesondere eines Thixotropiemittels.

Der Erfindung liegt die Aufgabe zugrunde, weitere Weichmacher vorzusehen, die in Silikonmassen verwendet werden können und die Dichtungsmassen wesentlich kostengünstiger in der Herstellung zu machen.

Diese Aufgabe wird erfindungsgemäß mit den Merkmalen des Anspruches 1 gelöst.

Die Verwendung eines Paraffinölgemisches, das aus 36-40 % zyklischen und 58-64 % nicht zyklischen Paraffinölen besteht, führt zu einer stabilen Dichtungsmasse, die im ausgehärteten Zustand nicht ausschwitzt. Die C-Verkettung liegt zwischen 14 bis 23 C-Atomen, wobei der Flammpunkt bei ca. 160° C und der Anilinpunkt bei ca. 101°C liegt.

Gemäß der Erfindung können nunmehr Paraffinöle in großem Umfang zur Steuerung der physikalischen-chemischen Eigenschaften der Dichtungsmasse eingesetzt werden, ohne daß bei deren Verarbeitung am Bau nachteilige Wirkungen wie Ausschwitz-Erscheinungen auftreten. Die Herstellkosten für den Weichmacher werden somit erheblich gesenkt.

Als besonders vorteilhaft hat sich ein Paraffinöl herausgestellt, dessen C-Verkettung zwischen 16 bis 21 C-Atomen liegt und bei dem der Anteil an nichtzyklischen zu zyklischen Paraffinölen 62 zu 38 % beträgt.

Darüber hinaus weisen die Dichtungsmassen auch sehr gute Stabilitätseigenschaften auf.

Die erfindungsgemäße Dichtungsmasse hat folgende Zusammensetzung in Gewichts-%:

| | |
|---|---|
| 5 - 12 % | Verdickungsmittel |
| 0 - 30 % | Füllstoffe |
| 0,01 - 0,5 % | Reaktionsbeschleuniger |
| 30 - 60 % | Silikonpolymer |
| 10 - 30 % | Weichmacher |
| 2,5 - 6 % | Vernetzer |

## Patentansprüche

1. Dichtungsmasse mit einem Silikonpolymer als Basis, einem Vernetzer und einem Beschleuniger sowie nach Bedarf zuzusetzenden Füllstoffen und einem Weichmacher, die im Kontakt mit der Umgebungsfeuchte, durch Wärmezufuhr oder durch Addition ihrer Bestandteile (2K-Produkte) aushärtet,
**dadurch gekennzeichnet, daß**
der Weichmacher insgesamt oder zum Teil aus einem Paraffinöl besteht, bei dem der Anteil der zyklischen Paraffinöle 36 bis 40 % und der Anteil der nichtzyklischen Paraffinöle 58 bis 64 % beträgt, daß das Gemisch aus Paraffinölen eine C-Verkettung von 14 bis 23 C-Atomen aufweist und daß der Flammpunkt ca. 160° C beträgt.

2. Dichtungsmasse nach Anspruch 1, **dadurch gekennzeichnet, daß** als Weichmacher ein Paraffinöl mit einer C-Verkettung von 16 bis 21 C-Atomen eingesetzt wird, wobei der Anteil der zyklischen Paraffinöle 38 % und der der nichtzyklischen Paraffinölen 62 % beträgt.

3. Dichtungsmasse nach Anspruch 2, **dadurch gekennzeichnet, daß** der Anilinpunkt ca. 101° C beträgt.

4. Dichtungsmasse nach einem der Ansprüche 1 bis 3, **dadurch gekennzeichnet, daß** die Dichtungsmasse folgende Zusammensetzung in Gewichts % aufweist.
| | |
|---|---|
| 5 - 12 % | Verdickungsmittel |
| 0 - 30 % | Füllstoffe |
| 0,01 - 0,5 % | Reaktionsbeschleunige |
| 30 - 60 % | Silikonpolymer |
| 10 - 30 % | Weichmacher |
| 2,5 - 6 % | Vernetzer, |

5. Dichtungsmasse nach einem der Ansprüche 1 bis 4, **dadurch gekennzeichnet, daß** als anteiliger Weichmacher nicht reaktive Polysiloxane, organische und aliphatische Verbindungen eingesetzt werden.

## Claims

1. A sealing compound with a silicone polymer as a base, a cross-linking agent and an accelerator as well as fillers to be added where necessary and a softener, which [compound] hardens in contact with the ambient moisture, by the supply of heat or by the addition of its constituents (2K products),
**characterized in that**
the softener consists wholly or in part of a paraffin oil in which the proportion of the cyclic paraffin oils amounts to from 36 to 40% and the proportion of the non-cyclic paraffin oils amounts to from 58 to 64%, the mixture of paraffin oils has a C-linkage of from 14 to 23 C atoms and the flame point amounts to approximately 160°C.

2. A sealing compound according to Claim 1, **characterized in that** a paraffin oil with a C-linkage of from 16 to 21 C atoms is used, wherein the proportion of the cyclic paraffin oils amounts to 38% and that of the non-cyclic paraffin oils amounts to 62%.

3. A sealing compound according to Claim 2, **characterized in that** the aniline point amounts to approximately 101°C.

4. A sealing compound according to one of Claims 1 to 3, **characterized in that** the sealing compound has the following composition in percentages by weight:
| | |
|---|---|
| 5 to 12 % | thickening agents |
| 0 to 30 % | fillers |
| 0·01 to 0·5 % | reaction accelerators |
| 30 to 60 % | silicone polymers |
| 10 to 30 % | softeners |
| 2·5 to 6 % | cross-linking agents. |

5. A sealing compound according to one of Claims 1 to 4, **characterized in that** nonreactive polysiloxanes and organic and aliphatic compounds are used as proportional softeners.

## Revendications

1. Matériau d'étanchéité comportant un polymère au silicone en tant que base, un réticulant et un accélérateur, ainsi que des charges à ajouter en cas de besoin et un plastifiant, durcissant au contact de l'humidité ambiante, par apport thermique ou bien par addition de ses composants (produits bicomposants),
**caractérisé en ce que**
le plastifiant est en tout ou en partie constitué d'une huile de paraffine, dans laquelle la proportion des huiles de paraffine cyclique est de 36 à 40 %, et la proportion des huiles de paraffine non cyclique est de 58 à 64 %, **en ce que** le mélange d'huiles de paraffine présente une formation de chaînes C comprenant de 14 à 23 atomes de C, et **en ce que** le point de flamme est d'environ 160°.

2. Matériau d'étanchéité selon la revendication 1, **caractérisé en ce qu'**on utilise comme plastifiant une huile de paraffine présentant une formation de chaînes C comprenant de 16 à 21 atomes de C, la proportion des huiles de paraffine cyclique étant de 38 % et celle des huiles de paraffine non cyclique étant de 62 %.

3. Matériau d'étanchéité selon la revendication 2, **caractérisé en ce que** le point d'aniline est d'environ 101°C.

4. Matériau d'étanchéité selon l'une des revendications 1 à 3, **caractérisé en ce que** le matériau d'étanchéité présente la composition suivante, exprimée en pourcentage en poids.
| | |
|---|---|
| 5 à 12 % | épaississant |
| 0 à 30 % | charge |
| 0,01 à 0,5 % | accélérateur de réaction |
| 30 à 60 % | polymère au silicone |
| 10 à 30 % | plastifiant |
| 2,5 à 6 % | réticulant |

5. Matériau d'étanchéité selon l'une des revendications 1 à 4, **caractérisé en ce qu'**on utilise, en tant que fraction de plastifiant, des polysiloxanes non réactifs, des composés organiques et aliphatiques non réactifs.
